# EUROPEAN PATENT SPECIFICATION

(11) **EP 3 063 372 B1**
(45) Date of publication and mention of the grant of the patent: **16.02.2022**
(21) Application number: 13900858.5
(22) Date of filing: 01.11.2013
(51) Int. Cl.: F01D 5/20

(54) **TURBINE AIRFOIL AND CORRESPONDING METHOD FOR REDUCING AIRFOIL TIP LEAKAGE LOSSES**
TURBINENSCHAUFEL UND ZUGEHÖRIGES VERFAHREN ZUR MINDERUNG VON SCHAUFELSPITZEN-LECKAGEVERLUSTEN
AUBE DE TURBINE ET PROCÉDÉ ASSOCIÉ POUR RÉDUIRE LES PERTES PAR FUITE EN BOUT D'AUBE

(43) Date of publication of application: 07.09.2016
(73) Proprietor: Raytheon Technologies Corporation, Farmington, CT 06032 (US)
(72) Inventor: ZELESKY, Mark F., Bolton, CT 06043 (US); AGGARWALA, Andrew S., Vernon, CT 06066 (US)
(74) Representative: Dehns
(86) International application number: PCT/US2013/068039
(87) International publication number: WO 2015/130254

(56) References cited:
- US-A- 4 738 586
- US-A- 5 997 251
- US-A- 6 027 306
- US-A1- 2013 266 454
- US-B1- 6 350 102

## Description

### TECHNICAL FIELD

The present invention relates to a turbine airfoil and a method for reducing airfoil tip leakage losses.

### BACKGROUND

The described subject matter relates generally to turbine engines and more specifically to cooling turbine blades.

Turbine engines provide efficient, reliable power for a wide range of applications in aviation, transportation and industrial power generation. Individual compressor and turbine section(s) may be subdivided into a number of stages, formed of alternating rows of rotor blade and stator vane airfoils. Due to various operational constraints, rotor blades and stator vanes are prone to leakage of compressed gases over their tips from a higher pressure surface to a lower pressure surface. Several attempts have been made to reduce these flows, but they cannot be completely eliminated due to clearance requirements over the airfoil tips which account for variations in both thermal and centrifugal growth of adjacent components.

US 6,027,306 A discloses a turbine airfoil as set forth in the preamble of claim 1, and a method for reducing airfoil tip leakage losses as set forth in the preamble of claim 10.

### SUMMARY

From a first aspect, the invention provides a turbine airfoil as recited in claim 1. There is also provided a method for reducing airfoil tip leakage losses as recited in claim 10.

Features of embodiments of the invention are set forth in the dependent claims.

### BRIEF DESCRIPTION OF THE DRAWINGS

FIG. 1 schematically depicts a cross-section of a turbofan gas turbine engine.
FIG. 2 shows a perspective of an exemplary gas turbine engine rotor blade.
FIG. 3A is a top plan view of the rotor blade shown in FIG. 2.
FIG. 3B is a partial cross-section of the rotor blade from FIG. 3A.
FIG. 3C is a graph showing relative pressures on opposing rotor blade surfaces.
FIG. 4A depicts a vortex caused by leakage over the tip of the rotor blade.
FIG. 4B shows a second view of the vortex caused by leakage between the tip and an adjacent seal surface.
FIG. 5A is a magnified view of tip leakage control channels and vanes.
FIG. 5B shows angles of tip leakage control channels and vanes from FIG. 5A.
FIG. 6A is a top plan view of a first alternative rotor blade tip wall configuration.
FIG. 6B is a partial cross-section of the alternative rotor blade tip wall configuration shown in FIG. 6A.
FIG. 7A is a top plan view of a second alternative tip wall configuration.
FIG. 7B is a partial cross-section of the alternative tip wall configuration shown in FIG. 7A.

### DETAILED DESCRIPTION

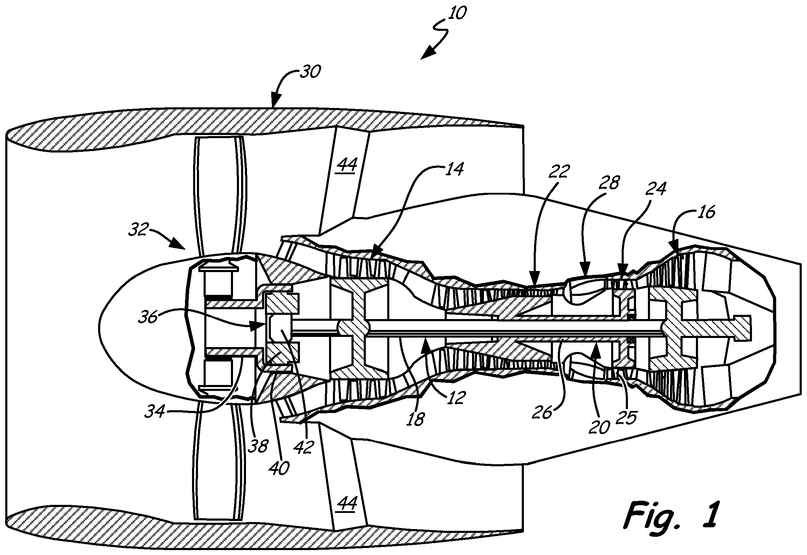

FIG. 1 is a cross-sectional view of gas turbine engine 10, including low spool 12, low pressure compressor (LPC) 14, low pressure turbine (LPT) 16, low pressure shaft 18, high spool 20, high pressure compressor (HPC) 22, high pressure turbine (HPT) 24, rotor blades 25, high pressure shaft 26, combustor 28, nacelle 30, propulsion fan 32, fan shaft 34, fan drive gear system 36, planetary gear 38, ring gear 40, sun gear 42, and fan exit guide vanes 44.

In the example two-spool, high bypass turbofan configuration, low spool 12 includes low pressure compressor (LPC) 14 driven by low pressure turbine (LPT) 16 via low pressure shaft 18. High spool 20 includes high pressure compressor (HPC) 22 driven by high pressure turbine (HPT) 24 via high pressure shaft 26. Low pressure shaft 18 and high pressure shaft 26 are mounted coaxially and rotate at different speeds. The power core also includes combustor 28 arranged in flow series between the compressor and turbine sections. HPT 24 and LPT 16 can each include at least one stage of circumferentially distributed rotor blades 25. More details of an example rotor blade 25 are described below.

Propulsion fan rotor 32 drives air through the bypass duct coaxially oriented between the engine core and nacelle 30. Fan rotor (or other propulsion stage) 32 can be directly or indirectly rotationally coupled to low pressure shaft 18. In advanced designs, fan drive gear system 36 couples fan shaft 34 to low spool 12, with respective planetary, ring, and sun gear mechanisms 38, 40 and 42 providing independent fan speed control for reduced noise and improved operating efficiency. In more conventional turbofan designs, fan drive gear system 36 is omitted and fan 32 is driven directly as part of low spool 12. Fan exit guide vanes (FEGVs) 44 are disposed between nacelle 30 and the engine core to reduce swirl and improve thrust performance through the bypass duct. In more compact engine designs, FEGV's may also be structural, providing combined flow turning and load bearing capabilities.

It will be recognized from the remainder of the description that the invention is by not limited to the example two-spool high bypass turbofan engine shown in FIG. 1. By way of further non-limiting examples, fan rotor 32 may additionally or alternatively include an unducted rotor, with turbine engine 10 thereby operating as a turboprop or unducted turbofan engine. Alternatively, fan rotor 32 may be absent, leaving nacelle 30 covering only the engine core, with turbine engine 10 thereby being configured as a turbojet or turboshaft engine. The described subject matter is also readily adaptable to other gas turbine engine components. While the working fluid is described here with respect to a combustion gas turbine, it will be appreciated that the described subject matter can be adapted to engines using other working fluids like steam.

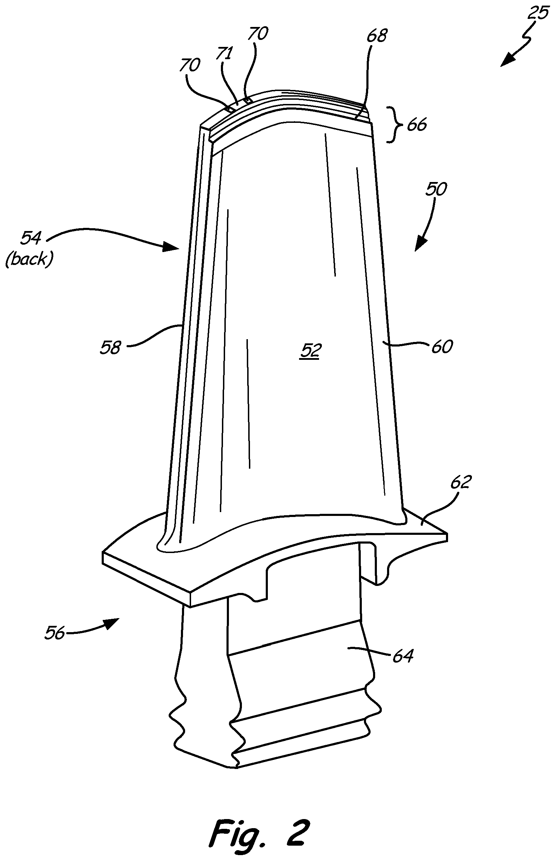

FIG. 2 is a perspective view of turbomachine rotor blade 25, and shows airfoil section 50, pressure sidewall 52, suction sidewall 54, base 56, leading edge 58, trailing edge 60, platform 62, root 64, tip wall 66, tip shelf 68, tip leakage control channels 70, and tip leakage control vane 71.

Rotor blade 25 includes airfoil 50 defined in part by pressure sidewall 52 (front) and suction sidewall 54 (back), each extending spanwise from base 56, and chordwise between leading edge 58 and trailing edge 60. Base 56 can include platform 62 and root 64, which in this example of rotating blade 25, secure airfoil 50 to a rotor disc (not shown). Tip wall 66 extends chordwise from leading edge 58 to trailing edge 60 to join respective outer spanwise ends of pressure sidewall 52 and suction sidewall 54. Airfoil 50 includes tip leakage control elements on or around tip wall 66 in the form of tip leakage control channels 70, it may additionally include tip leakage control elements in the form of tip shelf 68 and/or tip leakage control vane(s) 71. While this example is shown as rotor blade 25, airfoil 50 can alternatively define an aerodynamic section of a cantilevered stator vane, with attendant modifications made to the vane base for securing airfoil 50 to an outer circumferential casing.

In operation, pressurized gas flows generally chordwise along both sidewalls 52, 54 from leading edge 58 to trailing edge 60. Airfoil 50 is provided with one or more elements on or around tip wall 66, operating in conjunction with adjacent elements of engine 10 to reduce tip leakage losses. In this general example of blade 50, airfoil 25 includes tip shelf 68 at the junction of pressure sidewall 52 and tip wall 66. It will be recognized that in certain embodiments, tip shelf 68 may be omitted, leaving pressure sidewall 52 continuous up through its junction with tip wall 66. Tip wall 66 can also include at least one tip leakage control channel 70 and/or tip leakage control vane 71, such as is shown in the example embodiments below. With higher pressure differentials favored along the front-facing pressure sidewall 52, some of the higher pressure gas flowing along suction sidewall 54 tends to leak over tip wall 66. In traditional airfoil designs high pressure gradients from the pressure sidewall to the suction sidewall drives a leakage flow over the tip. This results in lost work extraction as the tangential momentum of the leakage flow is not changed by the airfoil, and higher aerodynamic losses as the leakage flow is reintroduced into the main passage flow. Both of these effects result in reduced efficiency. Tip leakage control channel(s) 70 and tip leakage control vane(s) 71 reduce some of the negative effects of this inevitable leakage flow.

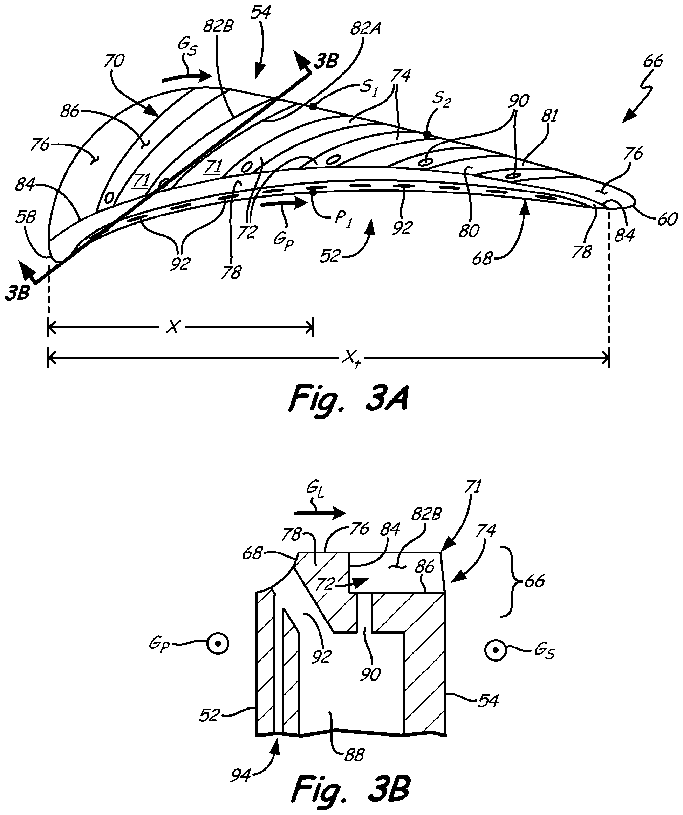

FIG. 3A is a top plan view of a first example embodiment of airfoil 50, showing tip wall 66. FIG. 3B is an upstream-facing cross-section taken along line 3B-3B. FIGS. 3A and 3B include pressure sidewall 52, suction sidewall 54, leading edge 58, trailing edge 60, tip wall 66, tip shelf 68, tip leakage control channels 70, tip leakage control vanes 71, control channel inlets 72, control channel outlets 74, tip outer surface 76, tip rib 78, control vane leading portion 80, control vane trailing portion 81, control channel/vane sidewalls 82A, 82B, tip rib suction side 84, control channel floors 86, internal cooling cavity 88, channel cooling apertures 90, tip shelf cooling apertures 92, and airfoil sidewall microcircuit 94.

In this first example embodiment, tip wall 66 includes at least one curved tip leakage control channel 70 and at least one curved tip leakage control vane 71. More than one tip leakage control channel 70 is distributed across at least a chordwise portion of tip wall 66 extending between airfoil leading edge 58 and airfoil trailing edge 60. Tip leakage control channels 70 each include inlet 72 and outlet 74, which are recessed into or otherwise formed with radially outer surface 76 of tip wall 66. One or more corresponding spanwise tip leakage control vanes 71, can be formed with tip wall outer surface 76 between pairs of adjacent tip leakage control channels 70.

Channel inlets 72, generally disposed proximate the junction of pressure sidewall 52 and tip wall 66. Inlets 72 can be offset widthwise from a junction in order to minimize effective tip clearance, and to block or trip some of the leakage flow G_{L} across wall 66. The plurality of channel inlets 72 are aligned along a chordwise path as shown. The channel inlets are aligned with tip rib 78, which extends chordwise along at least a portion of the pressure side of tip wall 66 between airfoil leading edge 58 and airfoil trailing edge 60. Tip rib 78 is provided as part of outer surface 76 to clearance between radially adjacent engine components such as a casing, an air seal, or a rotor land (if configured as part of a stator vane). Tip leakage control vanes 71 may have a leading portion 80 defined in part by chordwise-adjacent channel inlets 72, and a trailing portion 81 defined in part by chordwise-adjacent channel outlets 74. In this example, tip leakage control channels 70 are defined by sidewalls 82A, 82B, which can also respectively serve as control vane pressure sidewall 82A and control vane suction sidewall 82B. In certain embodiments, control vane leading portion 80 is contiguous with suction side 84 of tip rib 78 to further reduce leakage flow while directing the remainder into and through tip leakage control channels 70. Tip leakage control vane trailing portions 81 may be contiguous with suction sidewall 52 between channel outlets 74 terminating at a recessed portion of the junction of suction sidewall 52 and tip wall 66.

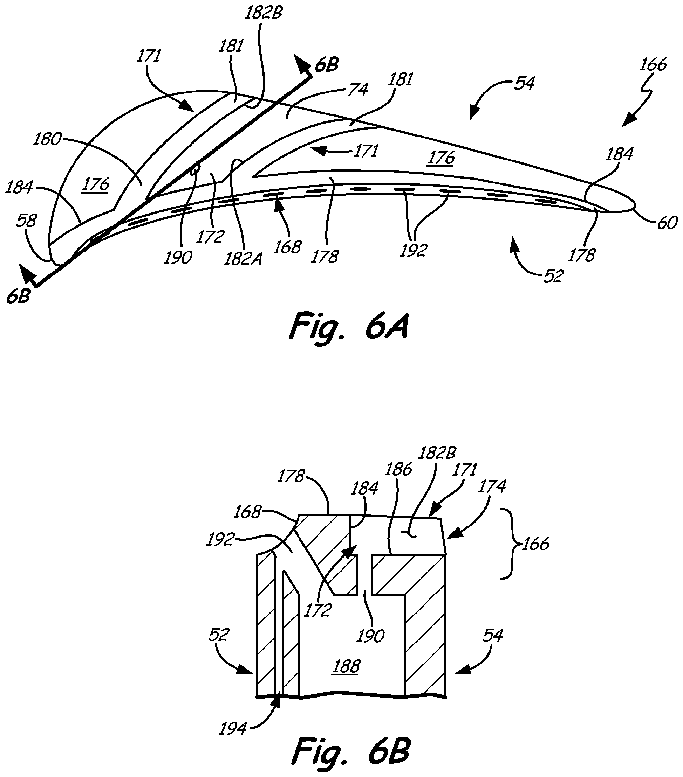

In this example, each tip leakage control channel 70 has a box shaped cross-section, where adjacent channel sidewalls 82A, 82B extend substantially perpendicular to flat channel floor 86. In this example, tip leakage control vanes 71 extend spanwise from adjacent control channel floors 86 recessed into tip wall 66 from outer surface 76. In alternative embodiments, such as those shown in FIGS. 6A and 6B, one or more vanes may extend spanwise from a lowered tip floor outer surface extending generally from airfoil leading edge 58 to trailing edge 60. It will be appreciated that one or more tip leakage control channels 70 can additionally or alternatively have different cross-sections, and those cross-sections can vary between inlet 72 and outlet 74. By way of one non-limiting example, one or more tip leakage control channels 70 can have a continuously curved sidewall to form a u-shaped cross-section. By way of other non-limiting examples, one or more tip leakage control channels 70 can have angled floors or sidewalls. In yet other examples, channel floor 86 can be omitted to form an upright v-shaped cross-section. Other irregular cross-sections are also possible for tailoring tip leakage control channels 70 and/or tip leakage control vanes 71 to different tip leakage profiles.

In certain embodiments, airfoil 50 is an internally cooled turbine blade, and includes at least one internal cooling cavity 88. Cooling cavity 88 can be formed during investment casting of airfoil 50 using one or more shaped casting cores. The cores may be made from ceramics, refractory metals, or a combination thereof. An example of a combined ceramic and refractory metal casting core is described in commonly assigned U.S. Patent 6,637,500 by Shah et al.

One or more tip leakage control channels 70 can include at least one control channel cooling aperture 90 in fluid communication with internal cavity 88 for cooling tip leakage control channel 70. While shown as a single round through hole drilled or cast into channel floor 86 proximate channel inlet 72, control channel cooling aperture 90 may be one or more control channel cooling apertures 90, at least some of which can have an alternative form or position tailored to the relative pressure profile over tip wall 66. Control channel cooling aperture 90 may, for example, additionally or alternatively discharge coolant into tip leakage control channel 70 from tip rib suction side 84, and/or channel sidewalls 82A, 82B. Tip shelf 68 can also additionally or alternatively include at least one tip shelf cooling aperture (pressure side cooling aperture) 92 to direct coolant along the junction of pressure sidewall 52 and tip wall 66. Tip shelf cooling apertures 92 thus may be diffusion holes or slots to create an effective wall of coolant along tip shelf 68 for impeding tip leakage. Tip shelf cooling apertures 92 can be in fluid communication with cooling cavity 88, which may be the same cavity 88 feeding control channel cooling apertures 90, or it may be a separate cooling cavity. In certain embodiments, pressure sidewall 52 and suction sidewall 54 can include one or more microcircuit cooling cavities 94 formed separate from or contiguous with internal cooling cavity 88. Microcircuit(s) 94, which may be formed in pressure sidewall 52 and/or suction sidewall 54 using at least one refractory metal casting core, can optionally be in fluid communication with tip shelf cooling apertures 92 or can alternatively feed coolant to dedicated apertures.

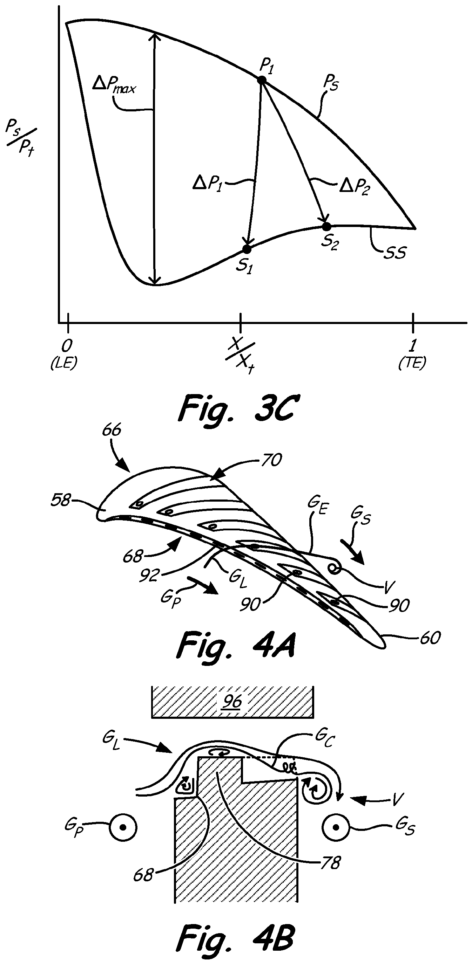

FIG. 3C is a graph of relative pressures around tip wall 66. FIG. 3C graphically shows the pressure relationship across tip wall 66 with vertical plotting of pressure ratio Pₛ/Pₜ at relative chordwise positions x/xₜ. Pₛ is the localized static pressure and Pₜ is the localized total pressure. For simplicity, the scale x/xₜ is measured linearly along chordwise tip rib suction side 84, which also doubles in this example as an upstream wall of each channel inlet 72. Other relative scales may be used giving slightly different relative pressure readings, but the relative pressure profiles will be substantially consistent across these different scales.

As is expected, pressure side (PS) and suction side (SS) readings of Pₛ/Pₜ are equal when x/xₜ is at point 0, corresponding to leading edge 58. The pressure differential ΔP increases then decreases chordwise until being equal again when x/xₜ reaches point 1, corresponding to trailing edge 60. The exact pressure relationship along tip wall 66 will depend on operating conditions, sweep of the airfoil, relative curvatures of pressure sidewall 52 and suction sidewall 54, among other factors. It can be seen that in the example turbine airfoil 50, there is a fairly large ΔP range around the midchord region of the tip. Around midchord, the PS pressure has not yet fallen off, while the SS pressure drops to a minimum before recovering close to trailing edge 60. Here, the maximum pressure differential ΔPₘₐₓ between pressure side flow Gp and suction side flow G_{S} occurs just forward of midchord.

As seen in FIG. 3A, tip wall 66 includes tip leakage control channels 70 and tip leakage control vanes 71 at various relative chordwise positions x/xₜ. To illustrate operation of one such tip leakage cooling channel 70 disposed roughly midchord along tip wall 66, FIG. 3C shows approximations of the relative pressure differentials ΔP₁ and ΔP₂, comparing leakage flow paths in a conventional blade tip versus a blade tip having at least one tip leakage cooling channel 70. With a conventional tip, leakage flow G_{L} originating around point P₁ of pressure sidewall 52 will take the shortest path over the tip wall toward point S₁ roughly perpendicular to pressure sidewall 52 at that point. Leakage flow G_{L} thus collides roughly perpendicular with suction flow G_{S} around point S₁. Since airfoil 50 is in relative rotational motion along with gas flows G_{P} and G_{S}, and because pressure side gas flow Gp is necessarily slower than G_{S}, leakage flow G_{L} between points P₁ and S₁ has virtually zero relative chordwise momentum, and high circumferential momentum, compared to substantial chordwise momentum of suction flow G_{S}.

In contrast, tip leakage control channel 70 captures a localized portion of leakage flow G_{L} at inlet 72, and redirects it through a curved portion of tip leakage control channel 70 toward airfoil trailing edge 60. The redirected flow is ejected from the channel, entering the suction side gas stream proximate point S₂, downstream of the normal point of entry S₁. Since tip leakage control channel 70 can be recessed below the outermost surface of tip wall 66, the flow enters the suction side gas stream below the junction of surface 76 and suction sidewall 54. In this example, Pₛ/Pₜ is actually greater at point S₂ than at point S₁, reducing the magnitude of leakage based on a smaller pressure differential ΔP₂. By redirecting the entry point of leakage flow G_{L} downstream toward point S₂, tip leakage control channel 70 (and tip leakage control vane 71) also imparts/converts a portion of the momentum into an increased chordwise component, which necessarily reduces the conflicting widthwise momentum component of the leakage flow perpendicular to suction side flow G_{S}. This has two positive effects on the gas flows.

Redirecting leakage momentum downstream from point S₁ allows leakage flow G_{L} to more quickly integrate into G_{S}, closer to suction sidewall 54. Decreasing widthwise momentum and/or increasing the tangential momentum of leakage flow G_{L} entering suction side flow G_{S} reduces conflict and turbulence at the entry point(s) by permitting less penetration of leakage flow G_{L} to into the main flow path of suction gas flow G_{S}. With a larger chordwise (tangential) momentum component aligned with flow G_{S}, there also ends up being less boundary flow disturbance of suction gas flow G_{S}, reducing flow separation around tip wall 66. All of these increase efficiency by reducing the size and strength of resulting tip leakage vortices as shown in FIGS. 4A and 4B.

FIG. 4A shows tip leakage vortices exiting tip leakage control channel 70 and being integrated into suction gas flow G_{S}, and includes pressure sidewall 52, suction sidewall 54, airfoil leading edge 58, airfoil trailing edge 60, tip wall 66, tip shelf 68, and tip leakage control channels 70, and control channel cooling apertures 90. FIG. 4B is a cross-section of tip wall 66 taken through tip leakage control channel 70 with air seal 96 radially adjacent tip wall 64 to minimize clearance at tip wall 66. Optional internal details of the blade and air seal 96, such as cavities and cooling apertures have been omitted for clarity and to better illustrate the effects of tip leakage control channel 70.

Air seal 96 cooperates with tip wall 66 to minimize clearance, and overall tip leakage therebetween. Air seal 96 can be any conventional or inventive blade outer air seal (BOAS) compatible with an unshrouded rotor blade. Air seal 96 may optionally include a sacrificial layer to reduce rubbing damage to tip rib 78, or more generally to tip wall 66, during maximum centrifugal and thermal expansion of airfoil 50 relative to the surrounding casing (not shown) onto which air seal 96 is mounted.

As explained above with respect to FIG. 3C, large pressure differentials across tip wall 66 result in leakage flow G_{L} passing over tip shelf 68 and tip rib 78 with substantial initial widthwise momentum. Tip leakage control channels 70 and tip leakage control vanes 71 help capture a portion of that flow, and redirect it downstream as it passes over tip wall 66, providing channel flow G_{C} with increased chordwise momentum compared to other leakage flow G_{L}. The portion of leakage flow G_{L} flowing through tip leakage control channel 70 joins with suction gas flow G_{S} at a higher pressure downstream location. Entry flow G_{E} results in vortex V when joining suction gas flow G_{S}. However, position of vortex V is smaller and closer to suction sidewall 54 than it would be absent tip leakage control channels 70 and tip leakage control vanes 71. The magnitude of vortex V can also be reduced due to addition of chordwise momentum to entry flow G_{E} from tip leakage control channels 70 and tip leakage control vanes 71.

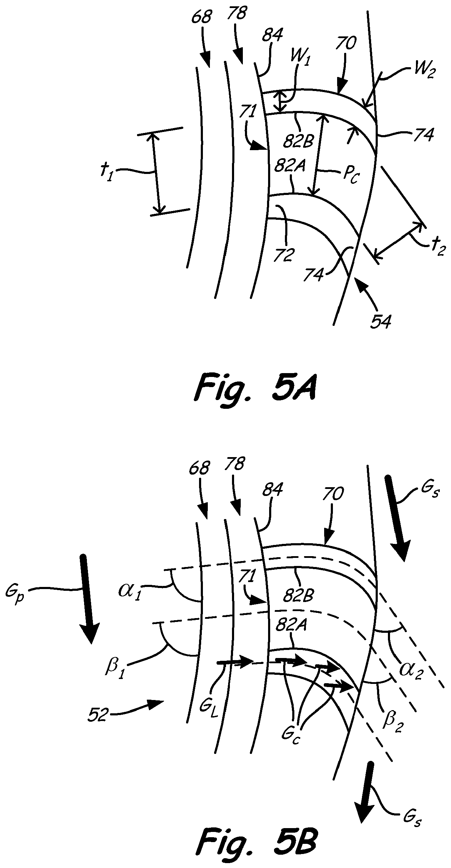

FIG. 5A shows two adjacent tip leakage control channels 70 bounding an intermediate tip leakage control vane 71, and also includes pressure sidewall 52, suction sidewall 54, tip wall 66, tip shelf 68, tip leakage control channels 70, tip leakage control vanes 71, control channel inlets 72, control channel outlets 74, tip outer surface 76, tip rib 78, vane leading portion 80, vane trailing portion 81, control channel/vane sidewalls 82A, 82B, tip rib suction side 84, and control channel floors 86. Control channel cooling apertures 90 and tip shelf cooling apertures 92 have been omitted for clarity.

As seen here, channel inlets 72 have first chordwise channel width W₁ proximate channel inlet 72, and outlets have second chordwise channel width W₂ proximate channel outlet 74. In certain embodiments, second chordwise channel width W₂ proximate outlet 74 is equal to or less than first chordwise channel width W₁ . In alternative embodiments, second chordwise channel width W₂ is greater than first chordwise channel width W₁. Similarly tip leakage control vane 71 includes leading chordwise thickness t₁ proximate tip rib 78, and trailing chordwise thickness t₂ proximate suction sidewall 54. In certain embodiments, trailing chordwise thickness t₂ is equal to or less than leading chordwise thickness t₁. In alternative embodiments, leading chordwise thickness t₁ is greater than trailing chordwise thickness t₂. Adjacent tip leakage control channels 70 can be separated by pitch P_{c}, which is an average distance between the sidewalls 82A, 82B of adjacent tip leakage control channels 70. P_{c} is shown as average separation because the first and second chordwise channel widths W₁, W₂ of individual tip leakage control channels 70 may vary in the same tip leakage control channel 70 as well as between adjacent tip leakage control channels. In certain embodiments P_{c} is constant across at least a chordwise portion of tip wall 66. Pitch P_{c} may vary elsewhere along tip wall 66 based on relative curvatures of tip leakage control channels 70 and tip leakage control vanes 71, described below in FIG. 5B.

FIG. 5B shows the relative angles of tip leakage control channels 70 and tip leakage control vanes 71 shown in FIG. 5A. Channel inlet 72 forms channel entrance interior angle α₁ relative to pressure sidewall 52. Channel outlet 74 forms channel exit interior angle α₂ relative to suction sidewall 54. In certain embodiments, angle α₂ is less than or equal to α₁. The effective curvature radius of tip leakage control channel 70 is thus the same or greater than the local curvature radius of tip wall 66.

In certain of those embodiments, channel entrance angle α₁ is between about 80° and about 95°. Channel entrance angle α₁ may be greater than 90° when leakage flow G_{L} cascading over the upper region of pressure sidewall 52 is expected to have a substantial chordwise flow component relative to the motion of airfoil 50 at the leakage point. When leakage flow G_{L} is expected to have substantially zero chordwise momentum around the leakage point, channel entrance angle α₁ may be less than or equal to about 90°. This may occur, for example, as a result of tip shelf 68 (and tip shelf cooling apertures 92) reducing net leakage flow G_{L}.

Flow out of control channel cooling apertures 90 (not shown in FIG. 5B) may also impart a counteracting momentum component to channel flow G_{C} once leakage flow G_{L} has entered inlet 72. In certain embodiments, channel exit angle α₂ can be less than about 90° which can impart additional chordwise momentum to channel flow G_{C} exiting outlet 74. Similarly, control vane leading portion 80 forms leading interior angle β₁ relative to pressure sidewall 52, and control vane trailing portion 81 forms trailing interior angle β₂ relative to suction sidewall 54. Angles β₁ and β₂ are measured around the respective chordwise midpoint of vane leading and trailing portions 80, 81. In certain embodiments, angle β₂ is less than or equal to β₁.

FIG. 5B also illustrates another effect of tip leakage control channels 70 and tip leakage control vanes 71. Since tip leakage flow typically enters tip leakage control channel 70 approximate perpendicular to the local junction with pressure sidewall 52, channel gas flow will tangentially strike sidewall 82A before being redirected. This can cause initial flow turbulence directly above channel inlet 72, which introduces tip vortices into the clearance gap between tip wall 66 and air seal 96 (shown in FIG. 4B), blocking a portion of additional leakage flow G_{L} over tip wall 66. These clearance vortices can be further enhanced by coolant flow directed outward from control channel cooling apertures 90. In addition, tangential contact of channel flow G_{C} with channel/vane sidewall 82A imparts a measure of thrust onto vane 71, allowing some work to be recovered from leakage flow.

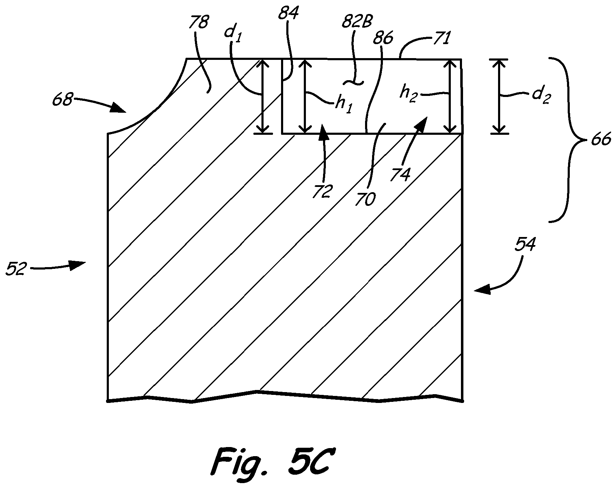

FIG. 5C is a side view of airfoil 50 with pressure sidewall 52, suction sidewall 54, tip wall 66, tip shelf 68, tip leakage control channel 70, tip leakage control vane 71, leakage control channel inlet 72, leakage control channel outlet 74, tip rib 78, leakage control vane leading portion 80, leakage control vane trailing portion 81, leakage control vane sidewall 82B, tip rib suction side wall 84, and leakage control channel floor 86.

FIG. 5C shows the radial dimensions of tip leakage control channel 70 and vane 71. As in FIG. 4B, internal details of the blade such as cavities and cooling apertures have been omitted to show the remaining reference dimensions of tip leakage control channel 70 and tip leakage control vane 71. It can be seen here that tip leakage control channel 70 can have first depth d₁ measured for example proximate inlet 72 and second depth d₂ proximate outlet 74. The depths are generally the respective distances that channel floor 86 is recessed relative to an upper portion of tip wall 66. This upper portion may be the top of tip rib 78 and/or tip leakage control vane 71, but in certain embodiments, first and second depths d₁, d₂ may be measured from different upper surface.

Similarly, a first height h₁ of tip leakage control vane 71 is measured around its leading portion 80, and a second height h₂ is measured around the trailing portion 81. These heights h₁ and h₂ are typically determined relative to channel floor 86. In certain embodiments, however, heights h₁ and h₂ can be determined relative to tip floor 76.

Depending on pressure differentials along a particular airfoil 50 (e.g., as shown in FIG. 3C), dimensions, separation, and curvature of tip leakage control channels 70 and tip leakage control vanes 71 may be adapted to optimize redirection of leakage flow while still maintaining adequate tip cooling and material strength. Dimensions of tip leakage control channels 70 and tip leakage control vanes 71 will also affect the practical dimensions and angles that can be achieved. These relative dimensions and pitches can be adapted optimize performance based on expected or modeled pressure differentials at different locations around tip wall 66. Relative curvatures can be defined first with dimensions resulting therefrom, or relative dimensions may be defined with resulting curvatures. The overall configuration of tip wall 66 can also be determined iteratively based on one or more constraints of the various widths, thicknesses, pitches, and angles.

For example, in locations where leakage is most likely, such as proximate midchord where pressure side pressures are highest, tip leakage control channels 70 may have a wider first chordwise channel width W₁. They can also be provided with a narrower second chordwise channel width W₂ relative to W₁, which can increase the pressure and exit velocity of leakage flow G_{L} entering the suction gas stream G_{S}. In other embodiments, at locations with lower relative suction side pressures, W₂ may be the same as or even greater than W₁ in order to more closely match the entry pressure and velocity. Further, the relative and absolute pressures, along with available tip wall surface area, will also determine the pitch P_{c} of tip leakage control channels 70. As before, the midchord region of tip wall 66 may have smaller pitch values P_{c}. It will be recognized that first chordwise channel widths W₁ will generally vary inversely with leading chordwise thickness t₁ and vice versa. Similarly, second chordwise channel widths W₂ generally vary inversely with trailing thickness t₂ and vice versa. As also explained below, channel floor 86 may be sloped such that d₂ is less than d₁.

FIG. 6A shows tip wall 166, which also includes pressure sidewall 52, suction sidewall 54, airfoil leading edge 58, airfoil trailing edge 60, tip shelf 168, tip leakage control channel 170, tip leakage control vanes 171, control channel inlet 172, control channel outlets 174, tip floor 176, tip rib 178, control vane leading portions 180, control vane trailing portions 181, control channel/vane sidewalls 182A, 182B, tip rib suction side 184, control channel floor 186, control channel cooling aperture 190, tip shelf cooling apertures 192, and airfoil sidewall microcircuit 194. FIG. 6B is a cross-section taken across line 6B-6B of FIG. 6A.

Tip wall 166 is a first alternative embodiment of tip wall 66 described above. Similar to FIG. 2, pressure sidewall 52 and sidewall 54 each extend spanwise from airfoil base 56 between leading edge 58 and trailing edge 60. Airfoil 50 also includes tip wall 166 extending chordwise from leading edge 58 to trailing edge 60. In this first example alternative embodiment, at least one curved tip leakage control vane 171 projects radially outward in a spanwise direction from tip wall 166. Tip leakage control vanes 171 each include leading vane portion 180 and trailing portion 181 between adjacent sidewalls 182A, 182B. Control vane leading portion 180 begins proximate a junction of airfoil pressure sidewall 52 and tip wall 166. Control vane trailing portion 181 terminates proximate a junction of airfoil suction sidewall 54 and tip wall 166.

In this first alternative embodiment, rather than having tip leakage control channels recessed into a tip floor as shown in FIGS. 3A and 3B, tip leakage control vanes 171 extend radially outward from a lower tip floor 176 extending at least partway between airfoil leading edge 58 and trailing edge 60. More than one tip leakage control vane 171 can be distributed chordwise across at least a portion of tip floor 176. A corresponding curved tip leakage control channel 170 can be defined at least in part by adjacent ones of the plurality of tip leakage control vanes 171. As above, channel inlet 172 can be defined by adjacent control vane leading portions 180, and channel outlet 174 can be defined by adjacent control vane trailing portions 181.

Tip rib 178 can also project spanwise from at least a chordwise portion of tip wall 166. In certain embodiments, tip rib 178 can extend at least partway between airfoil leading edge 58 and airfoil trailing edge 60 along pressure side of tip wall 166, outward from tip floor 176. In certain embodiments, such as is shown in FIG. 6A, of the control vane leading portion 196 can be contiguous with tip rib suction side surface 184. Tip shelf 168 with tip shelf cooling apertures 192 (in fluid communication with internal cooling cavity 188 and/or microcircuits 194) can be recessed into a pressure side surface of tip rib 178. Alternatively, the pressure side surface of tip rib 178 can be an extension of pressure sidewall 52.

Similar to the illustrations shown in FIGS. 5A and 5B, tip leakage control vane 171 can have leading portion 180 forming leading interior angle β₁ relative to pressure sidewall 52, and vane trailing portion forming interior angle β₂ relative to suction sidewall 54. In certain embodiments, angle β₂ can be less than or equal to β₁, which increases the chordwise component of leakage flow to reduce vortices and enhances work recovery from the captured leakage flow as described above with respect to FIGS. 5A and 5B.

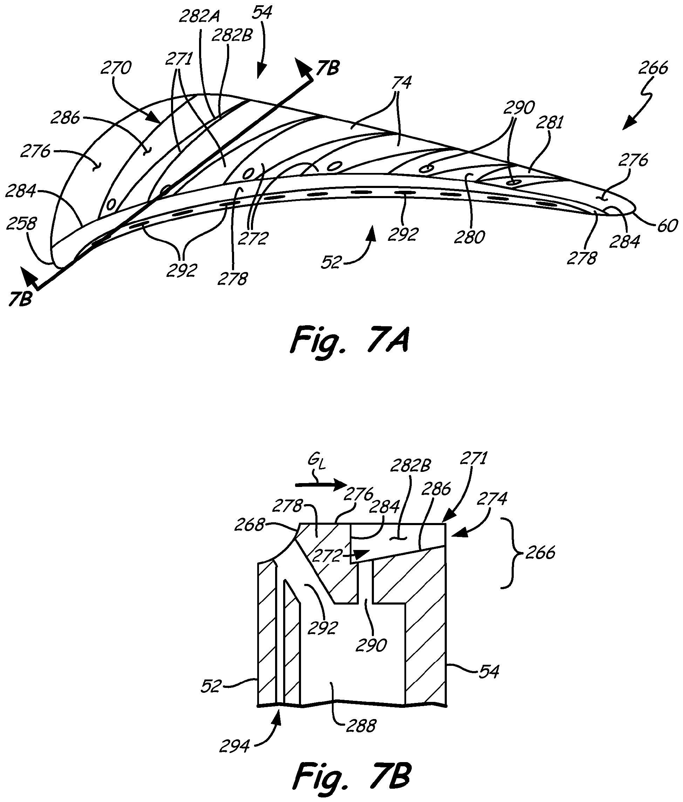

FIG. 7A shows tip wall 266, which also includes pressure sidewall 52, suction sidewall 54, airfoil leading edge 58, airfoil trailing edge 60, tip shelf 268, ramped tip leakage control channel 270, tip leakage control vanes 271, control channel inlets 272, control channel outlets 274, tip floor 276, tip rib 278, control vane leading portions 280, control vane trailing portions 281, control channel/vane sidewalls 282A, 282B, tip rib suction side 284, ramped control channel floor 286, control channel cooling aperture 290, tip shelf cooling apertures 292, and airfoil sidewall microcircuit 294. FIG. 6B is a cross-section taken across line 6B-6B of FIG. 6A.

Tip wall 266 is a second alternative embodiment of tip wall 66 described above. Similar to FIG. 2, pressure sidewall 52 and sidewall 54 each extend spanwise from airfoil base 56 between leading edge 58 and trailing edge 60. Airfoil 50 also includes tip wall 266 extending chordwise from leading edge 58 to trailing edge 60. In this second example alternative embodiment, tip shelf 266 includes at least one curved and ramped tip leakage control channel 270.

In this second example alternative embodiment, leakage control channel floor 286 is ramped upward, in contrast to the substantially flat channel floor 86 shown in FIGS. 3A and 3B. Thus, tip leakage control channel 270 is shallower at the suction side exit than at the pressure side inlet. As a result, leakage flow G_{L} is provided with increased pressure and exit velocity is decreased, allowing for more uniform leakage flow entering suction gas stream G_{S}.

Leakage flow can be further controlled by widening control channel outlets 274. As was shown in FIGS. 5A and 5B, tip leakage control channels have a first chordwise channel width W₁ that may be the same as or differ from second chordwise channel width W₂. In certain embodiments, including but not limited to the second alternative example embodiment of FIGS. 7A and 7B, second chordwise channel width W₂ is greater than first chordwise channel width W₁ so as to further improve uniformity of the leakage flow entering suction gas stream G_{S}. In certain of those embodiments, second chordwise channel width W₂ is approximately equal to the pitch P_{C} between adjacent tip leakage control channels (see FIG. 5A). In such embodiments, as second chordwise channel width W₂ approaches the local channel pitch P_{C}, the trailing chordwise thickness t₂ of adjacent tip leakage control vanes 271 will be less than leading control vane thickness (leading chordwise thickness) t₁ and will approach zero at the junction of suction sidewall 54 and tip wall 266. These shapes also contribute to reduced flow separation and tip vortices adjacent tip leakage control vanes 271.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A turbine airfoil (50) comprising:
a suction sidewall (54) and a pressure sidewall (52), each sidewall (52, 54) extending spanwise from an airfoil base (56) and extending chordwise between a leading edge (58) and a trailing edge (60);
a tip wall (66) extending chordwise from the leading edge (58) to the trailing edge (60) and joining respective outer spanwise ends of the suction and pressure sidewalls (52, 54); and
a plurality of tip leakage control channels (70) distributed across at least a chordwise portion of the tip wall (66) between the airfoil leading edge (58) and the airfoil trailing edge (60), each channel (70) recessed into an outer surface (76) of the tip wall (66), an inlet (72) of each tip leakage control channel (70) beginning proximate a junction of the airfoil pressure sidewall (52) and the tip wall (66), an outlet (74) of each tip leakage control channel (70) terminating at a recessed portion of a junction of the tip wall (66) and the suction sidewall (54), a portion of each tip leakage control channel (70) is curved toward the trailing edge (60) from the inlet (72) to the outlet (74); and **characterised in that**
the outer surface (76) includes a tip rib (78) extending chordwise along at least a portion of a pressure side of the tip wall (66) between the airfoil leading edge (58) and airfoil trailing edge (60); and **in that**
the channel inlets (72) are aligned with tip rib (78) along a chordwise path at the pressure side of the tip wall (66) between the airfoil leading edge (58) and airfoil trailing edge (60).

2. The turbine airfoil of claim 1, wherein each channel inlet (72) forms a channel entrance interior angle (α₁) relative to the pressure sidewall (52), and the channel outlet (74) forms a channel exit interior angle (α₂) relative to the suction sidewall (54), angle α₂ being less than or equal to (α₁).

3. The turbine airfoil of claim 2, wherein the channel entrance angle (α₁) is between about 80° and about 95°.

4. The turbine airfoil of claim 2 or 3, wherein the channel exit angle (α₂) is less than about 90°.

5. The turbine airfoil of any preceding claim, wherein a corresponding tip leakage control vane (71) is integrally formed on the tip wall (66) between adjacent ones of the plurality of tip leakage control channels (70).

6. The turbine airfoil of any preceding claim, wherein a second chordwise channel width (W₂) proximate the recessed outlet (74) is equal to or greater than a chordwise channel width (W₁) proximate the inlet (72).

7. The turbine airfoil of claim 6, wherein the second chordwise channel width (W₂) is approximately equal to a pitch (P_{c}) defined as an average distance between sidewalls (82A, 82B) of adjacent ones of the plurality tip leakage control channels (70).

8. The turbine airfoil of any preceding claim, wherein at least one of the plurality of channels (70) includes at least one control channel cooling aperture (90; 190) in fluid communication with an internal cooling cavity (88).

9. The turbine airfoil of any preceding claim, further comprising a tip shelf (68) recessed into a pressure side surface of the tip rib (178) at a junction of the airfoil pressure sidewall (52) and the tip wall (66), the tip shelf (68) extending along at least a chordwise portion of the junction extending between the airfoil leading edge (58) and the airfoil trailing edge (60).

10. A method for reducing airfoil tip leakage losses, the method comprising:
capturing a plurality of portions of working fluid leakage flow passing over a junction of an airfoil tip and pressure sidewall (52) in a plurality of tip leakage control channels (70) formed chordwise across a radially outer surface (76) of an airfoil tip wall (66);
redirecting each captured portion of the leakage flow downstream toward an airfoil trailing edge (60) through a curved portion of each of the plurality of tip leakage control channels (70); and
ejecting the redirected portion of the leakage flow out of each of the plurality of tip leakage control channels (70) into a suction side gas stream (Gₛ) below a junction of an airfoil suction sidewall (54) and the radially outer surface (76) of the tip wall (66);
wherein the curved portion of each of the plurality of tip leakage control channels (70) is curved downstream toward the trailing edge (60) of the airfoil (50) from a respective channel inlet (72) proximate a pressure side wall (52) to a respective channel outlet (74) at a suction sidewall (54); and **characterized in that** the outer surface (76) includes a tip rib (78) extending chordwise along at least a portion of a pressure side of the tip wall (66) between an airfoil leading edge (58) and the airfoil trailing edge (60), and the channel inlets (72) are aligned with the tip rib (78) along a chordwise path between the airfoil leading edge (58) and the airfoil trailing edge (60).

11. The method of claim 10, further comprising directing the captured working fluid tangentially against a tip leakage control vane (71) to recover work from the captured working fluid.

12. The method of claim 11, wherein outwardly facing sidewalls (82B) of the tip leakage control vane (71) are defined by inwardly facing sidewalls (82A) of chordwise adjacent ones of the plurality of tip leakage control channels (70).

13. The method any of claims 10 to 12, further comprising prior to the capturing step, impeding working fluid leakage flow over the airfoil tip wall (66), by directing a coolant flow outward through a plurality of cooling apertures (92; 192; 292) in a tip shelf (68) disposed along at least a chordwise portion of a junction of the tip wall (68) and the airfoil pressure sidewall (52).

14. The method of any of claims 10 to 13, wherein the redirecting step increases a tangential momentum component of the captured leakage flow (G_{L}) prior to the ejecting step to reduce the size and strength of one or more tip leakage vortices in the suction side gas stream.

## Patentansprüche

1. Turbinenschaufelprofil (50), umfassend:
eine Saugseitenwand (54) und eine Druckseitenwand (52), wobei sich jede Seitenwand (52, 54) in Spannweitenrichtung von einer Schaufelprofilbasis (56) erstreckt und sich in Profilsehnenrichtung zwischen einer Vorderkante (58) und einer Hinterkante (60) erstreckt;
eine Spitzenwand (66), welche sich in Profilsehnenrichtung von der Vorderkante (58) zu der Hinterkante (60) erstreckt und jeweilige äußere in Spannweitenrichtung verlaufenden Enden der Saug- und der Druckseitenwand (52, 54) verbindet; und
eine Vielzahl von Spitzenleckagesteuerkanälen (70), welche entlang mindestens eines in Profilsehnenrichtung verlaufenden Teils der Spitzenwand (66) zwischen der Schaufelprofilvorderkante (58) und der Schaufelprofilhinterkante (60) verteilt ist, wobei jeder Kanal (70) in eine äußere Fläche (76) der Spitzenwand (66) versenkt ist, wobei ein Einlass (72) jedes Spitzenleckagesteuerkanals (70) nahe eines Treffpunktes der Schaufelprofildruckseitenwand (52) und der Spitzenwand (66) beginnt, wobei ein Auslass (74) jedes Spitzenleckagesteuerkanals (70) in einem versenkten Teil eines Treffpunktes der Spitzenwand (66) und der Saugseitenwand (54) endet, wobei ein Teil jedes Spitzenleckagesteuerkanals (70) in Richtung der Hinterkante (60) von dem Einlass (72) zu dem Auslass (74) gekrümmt ist; und **dadurch gekennzeichnet, dass**
die äußere Fläche (76) eine Spitzenrippe (78) beinhaltet, welche sich in Profilsehnenrichtung entlang mindestens eines Teils einer Druckseite der Spitzenwand (66) zwischen der Schaufelprofilvorderkante (58) und der Schaufelprofilhinterkante (60) erstreckt; und dadurch, dass
die Kanaleinlässe (72) an der Spitzenrippe (78) entlang eines Wegs in Profilsehnenrichtung an der Druckseite der Spitzenwand (66) zwischen der Schaufelprofilvorderkante (58) und der Schaufelprofilhinterkante (60) ausgerichtet sind.

2. Turbinenschaufelprofil nach Anspruch 1, wobei jeder Kanaleinlass (72) einen Kanaleingangsinnenwinkel (α₁) bezogen auf die Druckseitenwand (52) bildet und der Kanalauslass (74) einen Kanalausgangsinnenwinkel (α₂) bezogen auf die Saugseitenwand (54) bildet, wobei α₂ kleiner als oder gleich (α₁) ist.

3. Turbinenschaufelprofil nach Anspruch 2, wobei der Kanaleingangswinkel (α₁) zwischen etwa 80° und etwa 95° ist.

4. Turbinenschaufelprofil nach Anspruch 2 oder 3, wobei der Kanalausgangswinkel (α₂) kleiner als etwa 90° ist.

5. Turbinenschaufelprofil nach einem der vorstehenden Ansprüche, wobei eine entsprechende Spitzenleckagesteuerleitschaufel (71) einstückig auf der Spitzenwand (66) zwischen benachbarten der Vielzahl von Spitzenleckagesteuerkanälen (70) gebildet ist.

6. Turbinenschaufelprofil nach einem der vorstehenden Ansprüche, wobei eine zweite Kanalbreite (W₂) in Profilsehnenrichtung nahe des versenkten Auslasses (74) gleich oder größer als eine Kanalbreite (W₁) in Profilsehnenrichtung nahe des Einlasses (72) ist.

7. Turbinenschaufelprofil nach Anspruch 6, wobei die zweite Kanalbreite in Profilsehnenrichtung (W₂) ungefähr gleich einem Pitch (P_{c}) ist, welcher als ein durchschnittlicher Abstand zwischen Seitenwänden (82A, 82B) von benachbarten der Vielzahl von Spitzenleckagesteuerkanälen (70) definiert ist

8. Turbinenschaufelprofil nach einem der vorstehenden Ansprüche, wobei mindestens einer der Vielzahl von Kanälen (70) mindestens eine Steuerkanalkühlöffnung (90; 190) beinhaltet, welche in Fluidkommunikation mit einem inneren Kühlhohlraum (88) steht.

9. Turbinenschaufelprofil nach einem der vorstehenden Ansprüche, ferner umfassend eine Spitzenabsatz (68), welche an einem Treffpunkt der Schaufelprofildruckseitenwand (52) und der Spitzenwand (66) in eine Druckseitenfläche der Spitzenrippe (178) versenkt ist, wobei sich die Spitzenabsatz (68) entlang mindestens eines in Profilsehnenrichtung verlaufenden Teils des Treffpunkts zwischen der Schaufelprofilvorderkante (58) und der Schaufelprofilhinterkante (60) erstreckt.

10. Verfahren zum Reduzieren eines Schaufelprofilspitzenleckageverlustes, wobei das Verfahren Folgendes umfasst:
Auffangen einer Vielzahl von Teilen eines Arbeitsfluidleckageflusses, welcher über einen Treffpunkt einer Schaufelprofilspitze und einer Druckseitenwand (52) in einer Vielzahl von Spitzenleckagesteuerkanälen (70) fließt, welche in Profilsehnenrichtung durch eine radial äußere Fläche (76) einer Schaufelprofilspitzenwand (66) gebildet sind;
Umleiten jedes aufgefangen Teils des Leckageflusses stromabwärts in Richtung einer Schaufelprofilhinterkante (60) durch einen gekrümmten Teil von jedem der Vielzahl von Spitzenleckagesteuerkanälen (70); und
Ausstoßen des umgeleiteten Teils des Leckageflusses aus jedem der Vielzahl von Spitzenleckagesteuerkanälen (70) in einen Saugseitengasstrom (G_{S}) unter einem Treffpunkt einer Schaufelprofilsaugseitenwand (54) und der radial äußeren Fläche (76) der Spitzenwand (66);
wobei der gekrümmte Teil von jedem der Vielzahl von Spitzenleckagesteuerkanälen (70) stromabwärts in Richtung der Hinterkante (60) des Schaufelprofils von einem jeweiligen Kanaleinlass (72) nahe einer Druckseitenwand (52) zu einem jeweiligen Kanalauslass (74) an einer Saugseitenwand (54) gekrümmt ist; und **dadurch gekennzeichnet, dass**
die äußere Fläche (76) eine Spitzenrippe (78) beinhaltet, welche sich in Profilsehnenrichtung entlang mindestens eines Teils einer Druckseite der Spitzenwand (66) zwischen einer Schaufelprofilvorderkante (58) und der Schaufelprofilhinterkante (60) erstreckt, und die Kanaleinlässe (72) an der Spitzenrippe (78) entlang eines Wegs in Profilsehnenrichtung zwischen der Schaufelprofilvorderkante (58) und der Schaufelprofilhinterkante (60) ausgerichtet ist.

11. Verfahren nach Anspruch 10, ferner umfassend ein Leiten des aufgefangenen Arbeitsfluids tangential gegen eine Spitzenleckagesteuerleitschaufel (71), um Arbeit aus dem aufgefangenen Arbeitsfluid zurückzugewinnen.

12. Verfahren nach Anspruch 11, wobei nach außen zeigenden Seitenwände (82B) der Spitzenleckagesteuerleitschaufel (71) durch nach innen zeigenden Seitenwände (82A) von in Profilsehnenrichtung verlaufend benachbarten der Vielzahl von Spitzenleckagesteuerkanälen (70) definiert sind.

13. Verfahren nach einem der Ansprüche 10 bis 12, ferner umfassend ein Erschweren eines Arbeitsfluidleckageflusses über die Schaufelprofilspitzenwand (66) vor dem Schritt des Auffangens, durch ein Leiten eines Kühlmittelflusses nach außen durch eine Vielzahl von Kühlöffnungen (92; 192; 292) in einer Spitzenabsatz (68), welche entlang mindestens eines in Profilsehnenrichtung verlaufenden Teils eines Treffpunkts der Spitzenwand (68) und der Schaufelprofildruckseitenwand (52) angeordnet sind.

14. Verfahren nach einem der Ansprüche 10 bis 13, wobei der Schritt des Umleitens eine tangentiale Momentumkomponente des aufgefangenen Leckageflusses (G_{L}) vor dem Schritt des Ausstoßens erhöht, um die Größe und Stärke von einem oder mehreren Spitzenleckagewirbeln in dem Saugseitengasstrom zu reduzieren.

## Revendications

1. Profil aérodynamique de turbine (50) comprenant :
une paroi d'extrados (54) et une paroi d'intrados (52), chaque paroi latérale (52, 54) s'étendant dans le sens de l'envergure depuis une base de profil aérodynamique (56) et s'étendant dans le sens de la corde entre un bord d'attaque (58) et un bord de fuite (60) ;
une paroi de bout (66) s'étendant dans le sens de la corde depuis le bord d'attaque (58) vers le bord de fuite (60) et joignant des extrémités extérieures respectives dans le sens de l'envergure des parois d'extrados et d'intrados (52, 54) ; et
une pluralité de canaux de commande de fuite en bout (70) répartis à travers au moins une partie dans le sens de la corde de la paroi de bout (66) entre le bord d'attaque (58) du profil aérodynamique et le bord de fuite (60) du profil aérodynamique, chaque canal (70) étant encastré dans une surface extérieure (76) de la paroi de bout (66), une entrée (72) de chaque canal de commande de fuite en bout (70) commençant à proximité d'une jonction de la paroi d'intrados (52) du profil aérodynamique et de la paroi de bout (66), une sortie (74) de chaque canal de commande de fuite en bout (70) se terminant au niveau d'une partie encastrée d'une jonction de la paroi de bout (66) et de la paroi d'extrados (54), une partie de chaque canal de commande de fuite en bout (70) est incurvée en direction du bord de fuite (60) depuis l'entrée (72) vers la sortie (74) ; et **caractérisé en ce que**
la surface extérieure (76) comporte une nervure de bout (78) s'étendant dans le sens de la corde le long d'au moins une partie d'un intrados de la paroi de bout (66) entre le bord d'attaque (58) du profil aérodynamique et le bord de fuite (60) du profil aérodynamique ; et **en ce que**
les entrées de canal (72) sont alignées avec la nervure de bout (78) le long d'un trajet dans le sens de la corde au niveau de l'intrados de la paroi de bout (66) entre le bord d'attaque (58) du profil aérodynamique et le bord de fuite (60) du profil aérodynamique.

2. Profil aérodynamique de turbine selon la revendication 1, dans lequel chaque entrée de canal (72) forme un angle intérieur d'entrée de canal (α₁) par rapport à la paroi d'intrados (52), et la sortie de canal (74) forme un angle intérieur de sortie de canal (α₂) par rapport à la paroi d'extrados (54), l'angle α₂ étant inférieur ou égal à (α₁).

3. Profil aérodynamique de turbine selon la revendication 2, dans lequel l'angle d'entrée de canal (α₁) est compris entre environ 80° et environ 95°.

4. Profil aérodynamique de turbine selon la revendication 2 ou 3, dans lequel l'angle de sortie de canal (α₂) est inférieur à environ 90°.

5. Profil aérodynamique de turbine selon une quelconque revendication précédente, dans lequel une aube de commande de fuite en bout (71) correspondante est formée d'un seul tenant sur la paroi de bout (66) entre des canaux adjacents parmi la pluralité de canaux de commande de fuite en bout (70).

6. Profil aérodynamique de turbine selon une quelconque revendication précédente, dans lequel une seconde largeur de canal dans le sens de la corde (W₂) à proximité de la sortie encastrée (74) est supérieure ou égale à une largeur de canal dans le sens de la corde (W₁) à proximité de l'entrée (72).

7. Profil aérodynamique de turbine selon la revendication 6, dans lequel la seconde largeur de canal dans le sens de la corde (W₂) est environ égale à un pas (P_{c}) défini comme une distance moyenne entre des parois latérales (82A, 82B) de canaux adjacents parmi la pluralité de canaux de commande de fuite en bout (70).

8. Profil aérodynamique de turbine selon une quelconque revendication précédente, dans lequel au moins l'un parmi la pluralité de canaux (70) comporte au moins une ouverture de refroidissement de canal de commande (90 ; 190) en communication fluidique avec une cavité de refroidissement interne (88).

9. Profil aérodynamique de turbine selon une quelconque revendication précédente, comprenant en outre un plateau de bout (68) encastré dans une surface d'intrados de la nervure de bout (178) au niveau d'une jonction de la paroi d'intrados (52) du profil aérodynamique et de la paroi de bout (66), le plateau de bout (68) s'étendant le long d'au moins une partie dans le sens de la corde de la jonction s'étendant entre le bord d'attaque (58) du profil aérodynamique et le bord de fuite (60) du profil aérodynamique.

10. Procédé pour réduire les pertes par fuite en bout de profil aérodynamique, le procédé comprenant :
la capture d'une pluralité de parties d'écoulement de fuite de fluide de travail passant sur une jonction d'un bout de profil aérodynamique et d'une paroi d'intrados (52) dans une pluralité de canaux de commande de fuite en bout (70) formés dans le sens de la corde sur une surface radialement extérieure (76) d'une paroi de bout (66) du profil aérodynamique ;
la réorientation de chaque partie capturée de l'écoulement de fuite vers l'aval en direction d'un bord de fuite (60) du profil aérodynamique à travers une partie incurvée de chacun parmi la pluralité de canaux de commande de fuite en bout (70) ; et
l'éjection de la partie réorientée de l'écoulement de fuite hors de chacun parmi la pluralité de canaux de commande de fuite en bout (70) dans un flux de gaz d'extrados (Gₛ) en dessous d'une jonction d'une paroi d'extrados (54) du profil aérodynamique et de la surface radialement extérieure (76) de la paroi de bout (66) ;
dans lequel la partie incurvée de chacun parmi la pluralité de canaux de commande de fuite en bout (70) est incurvée vers l'aval en direction du bord de fuite (60) du profil aérodynamique (50) depuis une entrée de canal (72) respective à proximité d'une paroi d'intrados (52) vers une sortie de canal (74) respective au niveau d'une paroi d'extrados (54) ; et **caractérisé en ce que**
la surface extérieure (76) comporte une nervure de bout (78) s'étendant dans le sens de la corde le long d'au moins une partie d'un intrados de la paroi de bout (66) entre un bord d'attaque (58) du profil aérodynamique et le bord de fuite (60) du profil aérodynamique, et les entrées de canal (72) sont alignées avec la nervure de bout (78) le long d'un trajet dans le sens de la corde entre le bord d'attaque (58) du profil aérodynamique et le bord de fuite (60) du profil aérodynamique.

11. Procédé selon la revendication 10, comprenant en outre l'orientation du fluide de travail capturé tangentiellement contre une aube de commande de fuite en bout (71) pour récupérer le travail du fluide de travail capturé.

12. Procédé selon la revendication 11, dans lequel des parois latérales tournées vers l'extérieur (82B) de l'aube de commande de fuite en bout (71) sont définies par des parois latérales tournées vers l'intérieur (82A) de canaux adjacents dans le sens de la corde parmi la pluralité de canaux de commande de fuite en bout (70).

13. Procédé selon l'une quelconque des revendications 10 à 12, comprenant en outre, avant l'étape de capture, le fait d'empêcher l'écoulement de fuite de fluide de travail sur la paroi de bout (66) du profil aérodynamique, en orientant un écoulement de liquide de refroidissement vers l'extérieur à travers une pluralité d'ouvertures de refroidissement (92 ; 192 ; 292) dans un plateau de bout (68) disposé le long d'au moins une partie dans le sens de la corde d'une jonction de la paroi de bout (68) et de la paroi d'intrados (52) du profil aérodynamique.

14. Procédé selon l'une quelconque des revendications 10 à 13, dans lequel l'étape de réorientation augmente une composante de moment tangentiel de l'écoulement de fuite capturé (G_{L}) avant l'étape d'éjection pour réduire la taille et la force d'un ou de plusieurs tourbillons de fuite en bout dans le flux de gaz d'extrados.
